# EUROPEAN PATENT SPECIFICATION

(11) **EP 0 664 649 B1**
(45) Date of publication and mention of the grant of the patent: **01.03.2000**
(21) Application number: 94302500.7
(22) Date of filing: 08.04.1994
(51) Int. Cl.: H04N 7/18

(54) **Image memory board and image memory system**
Bildspeicherschaltung und Bildspeichersystem
Circuit de mémoire d'image et système de mémoire d'image

(30) Priority: 24.01.1994 JP 2334794
(43) Date of publication of application: 26.07.1995
(73) Proprietor: PACIFIC CORPORATION, Tokyo (JP)
(72) Inventor: Irie, Kimiyasu, c/o Pacific Corporation, Tokyo (JP)
(74) Representative: Robson, Aidan John

(56) References cited:
- EP-A- 0 497 428
- FR-A- 2 672 761
- US-A- 5 187 574

## Description

### FIELD OF THE INVENTION

The present invention relates to an image memory board for use with a television monitor system including a television camera and a cathode-ray tube (CRT) display for receiving image signals from an image memory system and from the television camera employed in the television monitor system. Means are provided for storing the signals in a storage, and for supplying the CRT with image signals for reproduction thereof.

### Description of the Prior Art

In a conventional television monitor system installed, for example, in a house to monitor visitors, there is disposed at a location outside the house a television camera to obtain an image of a visitor such that the attained image is presented on a CRT display connected via a wire to the television camera. This enables a person staying at home to observe a mobile picture displayed on the CRT display. Moreover, the monitor system of the prior art is configured such that when all persons are away from the house, images shot by the camera are recorded in a storage (recording while the persons are absent) so that the recorded images are later reproduced. This thereby allows any one of the persons having returned home to check the recorded images so as to confirm visitors during the absent period of time. In the system, however, when recording and reproducing the images from the television camera, image signals therefrom are first transformed into luminance and color-difference signals and then into digital signals for storage and reproduction thereof.

US 5,187,574 and FR 2672761 both describe doorphone entry type systems. In particular, FR 2672761 describes a system in which images of visitors are stored in a memory while the occupier of a property is absent.

According to the conventional technology, when recording images from the monitor television camera in a storage, there are produced signals, for example, NTSC signals from the camera. Consequently, writing the signals in the memory requires a complicated system to achieve signal transforming operations, which leads to a problem that the image memory system becomes expensive.

### SUMMARY OF THE INVENTION

A preferred embodiment of the present invention, has therefore been devised in consideration of the problem above, to provide an image memory system in which complex elements to process and/or to memorize images from a monitor television camera are mounted on one sheet of image memory board having a simple configuration, thereby materializing a simple image memory system. Consequently, in a system including a monitor television camera and a CRT display, only when the image memory board is additionally installed, there can be implemented an image memory system to monitor and to record visitors.

In another preferred embodiment of the present invention there is provided an image memory board in which image signals from a monitor video camera are processed to be memorized in a storage such that the memorized images are reproduced in response to a pertinent indication from a person staying at home.

In accordance with an embodiment of the present invention there is provided an image memory board connected between a television camera to obtain images of visitors and a CRT display installed in a house to present processing image signals from the camera and storage means for storing therein image signals to display images on the CRT display.

In addition, the image memory board includes clock generator means for creating signals representing points of time and character generating means for producing character data.

Furthermore, another embodiment provides an image memory system having a television camera to produce images of visitors, an interphone, and a CRT display installed in a house to present images of visitors thereon including a keyboard for a person staying in the house to set an operation mode and an image memory board for processing and memorizing therein image signals. The memory board includes image signal processing means for processing image signals from the camera and storage means for storing therein image signals to present images on the CRT display. There is also disposed switching means to conduct a change-over operation in response to an indication from the keyboard between a through state in which an image of a visitor produced by the camera is directly presented on the CRT display in the house and a recording state in which the image created by the camera is written in a recording area.

Moreover, the image memory system includes record inhibition means for producing a signal to inhibit storage of image signals in the storage means for a predetermined period of time beginning at the first depression of a push button of the interphone.

### BRIEF DESCRIPTION OF THE DRAWINGS

Preferred embodiments will now be described in detail, by way of example, with reference to the accompanying drawings in which:
Fig. 1 is a block diagram schematically showing the construction of an image memory system and an image memory board embodying the present invention;
Fig. 2 is a schematic block diagram showing an image memory system embodying the present invention;
Fig. 3 is a diagram showing an example of a screen image displayed, when setting a point of time, on CRT display of an image memory system embodying the present invention;
Fig. 4 is a diagram showing an example of a screen image displayed, when receiving a visitor, on a CRT display of an image memory system embodying the present invention; and
Fig. 5 is a signal timing chart of input and output signals of a record inhibition circuit of the image memory board embodying the present invention.

### DESCRIPTION OF THE PREFERRED EMBODIMENTS

Referring now to the accompanying drawings, description will be given in detail of an embodiment of an image memory system and an image memory board embodying the present invention.

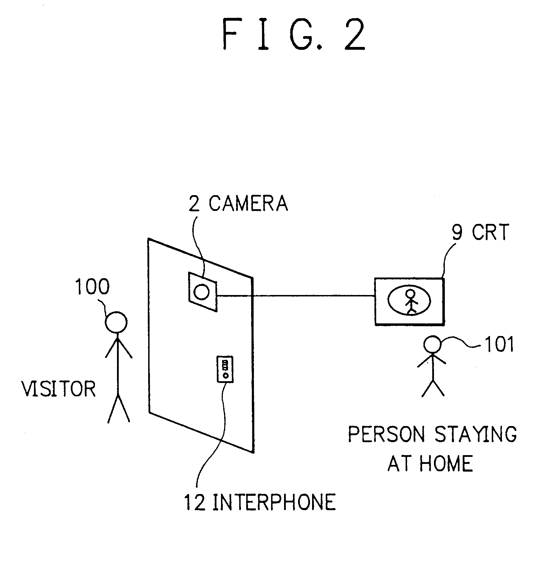

Fig. 2 schematically shows an image memory system operating in cooperation with an interphone.

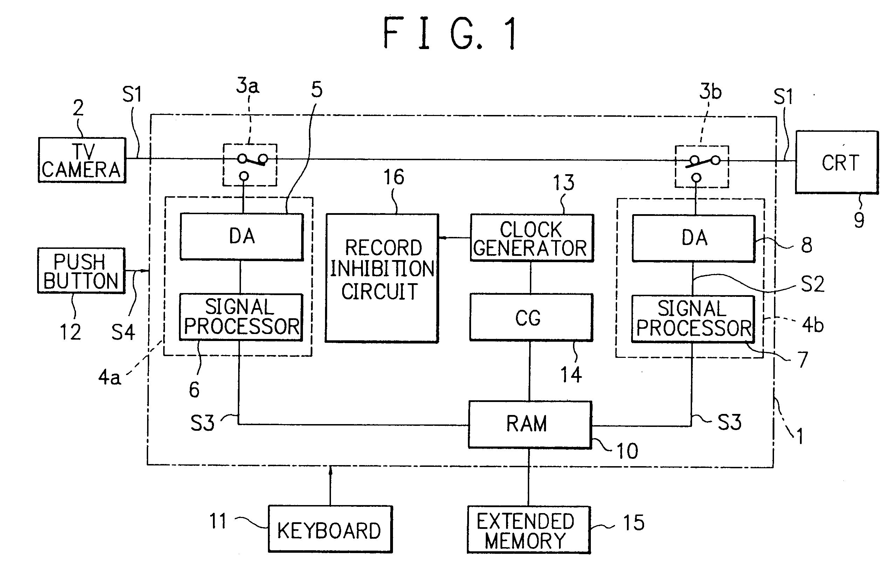

When a visitor 100 depresses an interphone button 12 arranged at an outdoor position, a television camera 2 is initiated to shoot the visitor 100 so as to display an image of the visitor 100 on a CRT display 9 so that a person 101 in the house observes the screen image. Fig. 1 shows in a block diagram an image memory system embodying invention. In this diagram, a portion enclosed with dash lines includes an image memory board 1 of the present invention. The memory board 1 is connected between the television camera 2 and the CRT 9.

In the board 1, when switches 3a and 3b provided as change-over means are set to connection sides as respectively denoted by solid lines in Fig. 1, the image memory system enters a through state. Namely, a mobile picture produced by the camera 2 is directly displayed on a screen of the CRT display 9 in response to depression of the interphone button 12. Conversely, when the switches are set to linkage sides as respectively indicated by dotted lines in Fig. 1, the memory system is in a recording state. In consequence, the mobile picture is stored in a random access memory (RAM), which is disposed as memory means, in response to depression of the button 12.

When the push button 12 disposed in the interphone is depressed, there is created a push-button signal S4 to activate the iamge memory system such that the television camera 2 shoots an image of a visitor to thereby produce an analog image signal S1 from the image. The signal S1 outputted from the camera 2 is fed via the switch 3a to a signal processing section 4a disposed as means to process image signals. The signal processor 4a includes an analog-to-digital (A/D) converter 5 and a signal processing circuit 6. The A/D converter 5 transforms the analog image signal S1 into a digital image signal S2, whereas the circuit 6 decomposes the signal S2 to attain a three primary color signal S3 associated with three primary colors, namely, red (R), green (G), and blue (B). The signal S3 produced from the circuit 4a is supplied to the RAM 10. In the RAM 10, there is stored the signal S3 corresponding to at least one still image.

Furthermore, to the image memory board 1, there can be connected an extended memory 15 to extend the storage capacity of the RAM 10, a signal is supplied to a signal processor 4b as signal processing means. The signal processor 4b includes a signal processing circuit 7 and a digital-to analog (D/A) converter 8. The signal processing circuit 7 processes the three primary color signal S3 containing R, G, B components from the RAM 10 to reproduce the original digital image signal S2. In addition, the D/A converter 8 transforms the reproduced digital signal S2 into the original analog image signal S1. The processor 4b has an output connected via the switch 3b to the CRT 9. According to the signal S1 supplied from the memory board 1, a moving picture created by the television camera 2 or a still image undergone the recording and reproducing operation is presented on a screen of the CRT display 9.

In addition, on the image memory board 1 of the present invention, there are disposed a clock generator 13 as means to generate clock signals and character generator (CG) 14 as means to create characters. The clock generator 13 produces signals representing a point of time and a date (in the form of year, month, and day). The character generator 14 creates character data according to signals outputted from the clock generator 13. The character generator 14 has an output port directly connected to the CRT 9 without passing through the switch 3b. Moreover, since the character generator 14 produces signals having frequencies comparable to those of the television camera 2, even when signals are not created from the camera 2 and the screen is dark in the CRT display 9, there can be displayed the time and date including the year, month, and day on the screen.

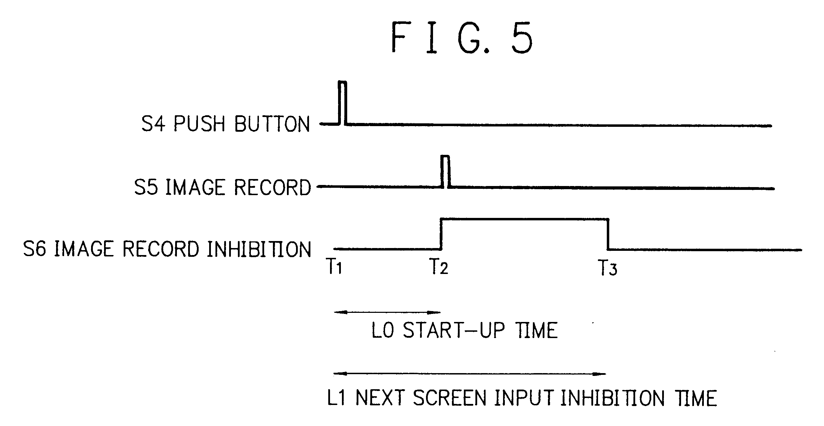

Furthermore, on the image memory board 1 there is mounted a record inhibition circuit 16 mounted as means to inhibit recording operation. The circuit 16 is linked with the clock generator 13 to count clock pulses from the generator 13. According to a result of the counting operation, passage of an image recording signal S5 (Fig. 5), which is an initiation signal to start a recording operation, is prevented by a gate circuit or the like for a predetermined period of time, thereby inhibiting the recording operation of the second and subsequent images. Consequently, thanks to the image record inhibition circuit 16, even when the visitor consecutively depresses the push button 12 several times, there is created only one still picture for the visitor. This prevents unnecessary reservation or allocation of areas in the RAM 10.

Furthermore, there is disposed a keyboard 11 in the image memory system of the present invention. From the keyboard 11, the person in the house achieves various operations, for example, to set the system to a through or recording state, to call a recorded image, and to input the time and the date (year, month, and day).

Description will next be given of operation of the image memory system and the image memory board in accordance with an embodiment of the present invention.

When the person staying at home observes a mobile picture in the through state according to an indication from the keyboard or an automatic setting operation, the analog image signal S1 from the television camera 2 installed near a door of the house is directly sent to the CRT display 9 so that the person monitors an image of a visitor in front of the door. When the recording state is established in response to an indication from the keyboard 11, the signal S1 of a still image from the camera 2 is transformed by the A/D converter 5 into a digital image signal S2. The signal S2 is then decomposed to generate a three primary color signal S3 including R, G, and B components by the signal processing circuit 6 so as to be stored in the RAM 10. When a reproduction of the image is indicated from the keyboard 11, the signal S3 is read from the RAM 10 to be transformed by the signal processor 7 into a digital image signal S2. The signal S2 is thereafter converted by the D/A converter 8 into an analog image signal S1 to be thereafter reproduced as a still image on the screen of the CRT display 9.

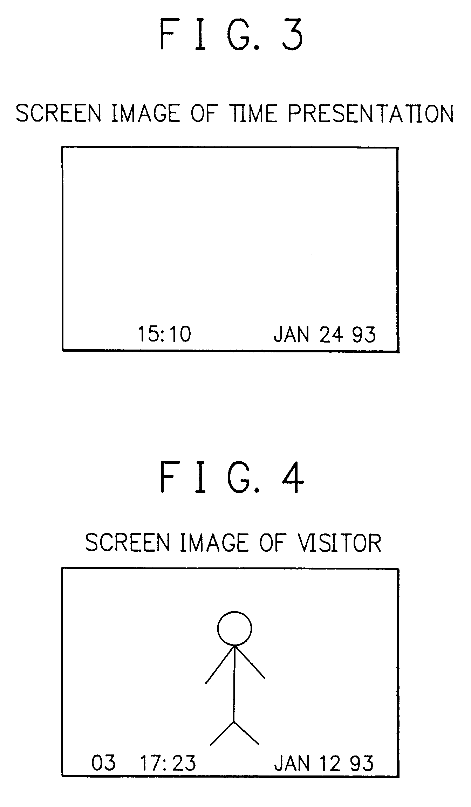

To record images in the storage during the absence of persons of the house, the person 101 sets from the keyboard 11 the image memory system to the recording state. During the absence of the person 101, when the visitor 100 depresses the push button 12, the image memory system starts its operation. Since the system has been set to the recording state in this case, a still image of the visitor 100 is written in the RAM 10 according to the storage operation in the recording state as described above. When a subsequent visitor 100 comes to the house and pushes the button 12, the image memory system again initiates operation thereof to memorize a still picture of the pertinent visitor 100. In this way, for each visit of a person 100, a still image thereof is sequentially recorded in the RAM 10. The plural still pictures thus successively stored in the RAM 10 are automatically assigned with numbers, respectively. For example, a number "03" is assigned to the still image of the third visitor. After the person 101 returns home, the still pictures of the visitors 100 having called at the house are reproduced as follows. There may be specified from the keyboard 11 a number assigned to a desired still picture thus recorded so as to start the playback operation from the picture having the specified number. Alternatively, the image reproduction may be conducted from the first memorized image. The screen image thus reproduced on the CRT display 9 is, for example, as shown in Fig. 4.

In addition, the clock generator 13 on the image memory board 1 generates a signal representing a point of time. According to the signal from the generator 13, there is produced character data from the character generator 14, thereby displaying the time and date (year, month, and day) on the CRT display 9. To adjust the time, the person staying at home need only conduct a pertinent operation from the keyboard 11 to appropriately activate the clock generator 13. Moreover, since the character generator 14 creates signals having video frequencies, even when there are missing signals from the television camera 2 (namely, even when the screen is dark), the time can be displayed on the screen, for example, as shown in Fig. 3. In consequence, the person can desirably set the time from the keyboard 11. For examle, a position where the characters are to be displayed may also be determined by controlling signals created from the CG 14.

Fig. 5 is a timing chart of signals related to operation of the record inhibition circuit 16.

The push-button signal S4 is a clock signal generated when the push button 12 is depressed by a visitor at a point of time T1. The recording signal S5 is created at a point of time T2 when a start-up time L0 is elapsed after the generation of the clock signals, namely, the push-button signal S4. The signal S5 initiates an operation to shoot a mobile picture or to record a still picture. A next screen input inhibition time L1 is a period of time between the points of time T1 and T3 in which the next screen image is inhibited from being recorded repeatedly in the memory 10. When an image record inhibition signal S6 is at an H level, the recording operation of a still picture is inhibited. In consequence, in a case where the push-button signal S4 is repeatedly produced during a short period of time due to successive depressions of the push button 12 and the clock pulse of the recording signal S5 is accordingly created again during the next screen input inhibition time L1, still screen is inhibited from being memorized in the system. In other words, in the period of time from T1 to T3, the still picture is not recorded again in the memory 10. The record inhibition circuit 16 of this kind may be configured with, for example, a combination of a delay circuit and a gate circuit.

In accordance with an embodiment of the present invention, means for processing and memorizing image signals from a television camera is mounted on a sheet of image memory board. Consequently, only when the image memory board is installed between the television camera and a CRT display, there can be obtained an image memory system in which images shot by the television camera are monitored, recorded, and reproduced. Consequently, there is provided an inexpensive, small-sized, and lightweight image memory system. Moreover, an extended memory can be attached to memory means to increase the memory capacity of the storage area in which still pictures are to be stored. In addition, in response to depression of the push button of the interphone by a visitor, an image of the visitor is recorded in the memory only when a predetermined period of time is elapsed after the depression. In consequence, there can be recorded an appropriate image of the visitor. Furthermore, the image is inhibited from being recorded again in the memory for a predetermined period of time after the recording thereof. Consequently, even when the visitor successively depresses the push button several times, there can be prevented an unnecessary allocation of areas in the storage means, thereby saving the storage capacity.

While the present invention has been described with reference to the particular illustrative embodiments, it is not to be restricted by those embodiments but only by the appended claims.

## Claims

1. An image memory board (1) to be connected between a television camera (2) for shooting an image of a visitor in response to a switching means, and a CRT display (9) for presenting thereon the image of the visitor in a room of the house, wherein the image memory board comprises:
first image signal processing means (6) for processing image signals from the camera;
storage means (10) for storing therein the image signals processed by the first image signal processing means;
second image processing means (7) for processing the image signals read from the storage means so that the image signals are displayed on the CRT display; and characterised in that it further comprises
record inhibition time setting means (16) for setting record inhibition time so as to inhibit storing of image signals in the storage means for a predetermined period of time after a first operation of the switching means thereby storing a still image from the camera.

2. An image memory board as claimed in claim 1, further characterised by:
clock generator means (13) for generating a signal representing a point of time; and
character generating means (14) for generating character data.

3. An image memory system comprising:
a television camera (2) for shooting an image of a visitor;
an interphone (12);
a CRT display (9) for presenting thereon the image of the visitor in a room of the house;
a keyboard (11) for a person staying in the house to set a mode;
an image memory board (1) for processing and storing therein image signals; and
switching means (3a,3b) for achieving a change-over operation between a through state in which the image of the visitor produced by the camera is directly presented on the CRT display in the room and a recording state in which the image created by the camera is recorded in the storage means, wherein the image memory board comprises:
first image signal processing means (6) for processing image signals from the camera;
storage means (10) for storing therein the image signals processed by the first image signal processing means;
second image processing means (7) for processing the image signals read from the storage means so that the image signals are displayed on the CRT display; and characterised in that the image memory board further comprises
record inhibition time setting means (16) for setting record inhibition time so as to inhibit storing of image signals in the storage means for a predetermined period of time after a first operation of the switching means.

## Patentansprüche

1. Bildspeicherkarte (1) für den Anschluß zwischen einer Fernsehkamera (2), um ein Bild von einem Besucher als Reaktion auf ein Schaltmittel zu schießen, und einem Bildschirm (9), um darauf das Bild des Besuchers in einem Raum des Hauses darzustellen, wobei die Bildspeicherkarte folgendes umfaßt:
ein erstes Bildsignalverarbeitungsmittel (6) zum Verarbeiten von Bildsignalen von der Kamera;
ein Speichermittel (10), um darin die mit dem ersten Bildsignalverarbeitungsmittel verarbeiteten Bildsignale zu speichern;
ein zweites Bildverarbeitungsmittel (7) zum Verarbeiten der von dem Speichermittel gelesenen Bildsignale, so daß die Bildsignale auf dem Bildschirm angezeigt werden; und dadurch gekennzeichnet, daß sie ferner folgendes umfaßt:
Datensatzsperrzeit-Einstellmittel (16) zum Einstellen der Datensatzsperrzeit, um die Speicherung von Bildsignalen für eine vorbestimmte Zeitdauer nach einer ersten Betätigung des Schaltmittels zu sperren, um dadurch ein Standbild von der Kamera zu speichern.

2. Bildspeicherkarte nach Anspruch 1, ferner gekennzeichnet durch:
ein Takterzeugungsmittel (13) zum Erzeugen eines Signals, daß einen Zeitpunkt repräsentiert; und
ein Zeichenerzeugungsmittel (14) zum Erzeugen von Zeichendaten.

3. Bildspeichersystem, umfassend:
eine Fernsehkamera (2) zum Schießen eines Bildes von einem Besucher;
eine Türsprechanlage (12);
einen Bildschirm (9), um darauf das Bild von dem Besucher in einem Raum des Hauses darzustellen;
eine Tastatur (11) für eine in dem Haus befindliche Person, um einen Modus einzustellen;
eine Bildspeicherkarte (1), um Bildsignale darin zu verarbeiten und zu speichern; und
Schaltmittel (3a, 3b) zur Erzielung eines Umschaltvorgangs zwischen einem Durchgangszustand, indem dem das von der Kamera erzeugte Bild von dem Besucher direkt auf dem Bildschirm in dem Raum dargestellt wird, und einem Aufzeichnungszustand, in dem das von der Kamera erzeugte Bild in dem Speichermittel aufgezeichnet wird, wobei die Bildspeicherkarte folgendes umfaßt:
ein erstes Bildsignalverarbeitungsmittel (6) zum Verarbeiten von Bildsignalen von der Kamera;
ein Speichermittel (10), um darin die von dem ersten Bildsignalverarbeitungsmittel verarbeiteten Bildsignale zu speichern;
ein zweites Bildverarbeitungsmittel (7) zum Verarbeiten der von dem Speichermittel gelesenenen Bildsignale, so daß die Bildsignale auf dem Bildschirm angezeigt werden; und dadurch gekennzeichnet, daß die Bildspeicherkarte ferner folgendes umfaßt:
ein Datensatzsperrzeit-Einstellmittel (16) zum Einstellen der Datensatzsperrzeit, um die Speicherung von Bildsignalen in dem Speichermittel für eine vorbestimmte Zeitdauer nach einer ersten Betätigung des Schaltmittels zu sperren.

## Revendications

1. Carte de mémoire d'image (1) destinée à être connectée entre une caméra de télévision (2) pour filmer une image d'un visiteur en réponse à un moyen de commutation, et un affichage à écran cathodique (9) pour présenter sur celuici l'image du visiteur dans une pièce de la maison, la carte de mémoire d'image comprenant :
un premier moyen de traitement de signaux d'image (6) pour traiter des signaux d'image provenant de la caméra ;
un moyen de stockage (10) pour stocker dans celui-ci les signaux d'image traités par le premier moyen de traitement de signaux d'image ;
un deuxième moyen de traitement d'image (7) pour traiter les signaux d'image lus à partir du moyen de stockage de telle sorte que les signaux d'image soient affichés sur l'affichage à écran cathodique ; et caractérisée en ce qu'elle comprend en outre
un moyen de réglage de temps d'inhibition d'enregistrement (16) pour régler un temps d'inhibition d'enregistrement de manière à inhiber le stockage de signaux d'image dans le moyen de stockage pendant une période de temps prédéterminée après une première opération du moyen de commutation stockant ainsi une image fixe provenant de la caméra.

2. Carte de mémoire d'image selon la revendication 1, caractérisée en outre par :
un moyen de génération d'horloge (13) pour générer un signal représentant un point dans le temps ; et
un moyen de génération de caractères pour générer des données de caractères.

3. Système de mémoire d'image comprenant :
une caméra de télévision (2) pour filmer une image d'un visiteur ;
un interphone (12) ;
un affichage à écran cathodique (9) pour présenter sur celui-ci l'image du visiteur dans une pièce de la maison ;
un clavier (11) pour permettre à une personne restant dans la maison de régler un mode ;
une carte de mémoire d'image (1) pour traiter et stocker dans celle-ci des signaux d'image ; et
un moyen de commutation (3a, 3b) pour effectuer une opération de permutation entre un état de passage dans lequel l'image du visiteur produite par la caméra est directement présentée sur l'affichage à écran cathodique dans la pièce et un état d'enregistrement dans lequel l'image créée par la caméra est enregistrée dans le moyen de stockage, dans lequel la carte de mémoire d'image comprend :
un premier moyen de traitement de signaux d'image (6) pour traiter des signaux d'image provenant de la caméra ;
un moyen de stockage (10) pour stocker dans celui-ci les signaux d'image traités par le premier moyen de traitement de signaux d'image ;
un deuxième moyen de traitement d'image (7) pour traiter les signaux d'image lus à partir du moyen de stockage de telle sorte que les signaux d'image soient affichés sur l'affichage à écran cathodique ; et caractérisé en ce que la carte de mémoire d'image comprend en outre
un moyen de réglage de temps d'inhibition d'enregistrement (16) pour régler un temps d'inhibition d'enregistrement de manière à inhiber le stockage de signaux d'image dans le moyen de stockage pendant une période de temps prédéterminée après une première opération du moyen de commutation.
